# EUROPÄISCHE PATENTSCHRIFT

(11) **EP 0 735 638 B1**
(45) Veröffentlichungstag und Bekanntmachung des Hinweises auf die Patenterteilung: **09.09.1998**
(21) Anmeldenummer: 96101208.5
(22) Anmeldetag: 29.01.1996
(51) Int. Cl.: H02G 1/12

(54) **Abisolierzange**
Stripping pliers
Pince à dénuder

(30) Priorität: 31.03.1995 DE 19512132
(43) Veröffentlichungstag der Anmeldung: 02.10.1996
(73) Patentinhaber: Weidmüller Interface GmbH & Co., D-32760 Detmold (DE)
(72) Erfinder: Wiebe, Ulrich, D-32694 Dörentrup (DE); Schmode, Hartmut, D-32825 Blomberg (DE); Herzog, Armin, D-32760 Detmold (DE); Kornfeld, Joachim, D-32602 Vlotho (DE); Hetland, Detlev, D-32760 Detmold (DE); David, Bernd, D-32756 Detmold (DE); Hanning, Günther, D-32758 Detmold (DE); Bornefeld, Thorsten, D-33189 Schlangen (DE); Siegmund, Gernot, D-32760 Detmold (DE)
(74) Vertreter: TER MEER STEINMEISTER & PARTNER GbR

(56) Entgegenhaltungen:
- EP-A- 0 099 865
- EP-A- 0 687 049
- DE-C- 4 420 050
- GB-A- 2 083 400

## Beschreibung

Die Erfindung betrifft eine Abisolierzange gemäß dem Oberbegriff des Patentanspruchs 1. Eine derartige Abisolierzange geht bereits aus der GB-A-2 083 400 hervor. Zu dieser und den aus der EP-A-0 687 049 (Artikel 54(3)EPÜ), der DE 24 02 187 B2 und dem DE 90 06 400 U1 bekannten Abisolierzangen gehören ein Zangengehäuse, zwei relativ zueinander verschwenkbare Klemmbacken zur Bildung eines Zangenmauls, in welchem zwei Abisolierorgane mitteis einer Zugstange in Maullängsrichtung verschiebbar angeordnet sind, zwci relativ zueinander verschwenkbare Handgriffe, und eine im Zangengehäuse angeordnete und durch die Verschwenkbewegung der Handgriffe antreibbare Antriebsvorrichtung zum Verschwenken der Klemmbacken relativ zueinander sowie zum Längsverschieben der Zugstange.

Bei der herkömmlichen Abisolierzange ist die Antriebsvorrichtung in Form eines Kniehebelgelenks ausgebildet, wobei ein mit einem bewegbaren Handgriff verbundenes Gelenkhebelpaar über einen Kniehebel einen mit dem Zangengehäuse gelenkig verbundenen Klemmbacken antreibt und wobei ferner die Zugstange über den Kniehebel beaufschlagt wird. Bricht das Kniehebelgelenk durch, so wird die Zugstange relativ abrupt verschoben, was zu starken Stoßbelastungen im Handgelenk des Benutzers der Zange führt, die zudem mit relativ großer Kraft betätigt werden muß.

Aus der US 3,324,702 ist einzangenartiges Quetschwerkzeug bekannt, bei dem der Antrieb der beweglichen Zangenbacke durch eine Kurvenscheibe erfolgt.

Der Erfindung liegt die Aufgabe zugrunde, die Zange der eingangs genannten Art so weiterzubilden, daß sie einen höheren Benutzerkomfort aufweist.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Insbesondere läßt sich die Zugstange direkt oder indirekt mittels der Kurvenscheibe antreiben, so daß je nach Verlauf der Führungsfläche der Kurvenscheibe in Abhängigkeit von der Verschwenkstellung der Handgriffe eine gewünschte Stellkraft auf die Zugstange wirkt, die so gewählt ist, daß unangenehme Prelleffekte beim Abisolieren eines Leiters mit Hilfe der Abisolierzange vermieden werden. Durch geeignete Ausbildung des Verlaufs der Kurvenscheibe läßt sich darüber hinaus eine Selbstklemmung zwischen verschwenkbarem Klemmbacken und Kurvenscheibe nach Schließung des Zangenmauls erreichen, so daß jetzt nur noch die Kraft zum Antrieb der Zugstange aufgebracht werden muß, was zu einer erheblichen Reduzierung des Kraftaufwands beim Betrieb der Zange führt.

Die erfindungsgemäße Abisolierzange kann so ausgebildet sein, daß mit dem Zangengehäuse einer der Handgriffe und der auf der gegenüberliegenden Seite des Zangengehäuses befindliche Klemmbacken starr verbunden sind, während der andere der Handgriffe und der andere Klemmbacken verschwenkbar am Zangengehäuse gelagert sind.

Vorzugsweise ist zum Antrieb des verschwenkbaren Klemmbackens an einem Abschnitt von ihm, welcher eine Verschwenkachse für diesen zum hinteren Zangenende hin überragt, ein Steuerelement angelenkt, das mit einer Führungsfläche der wenigstens einen Kurvenscheibe zusammenarbeitet bzw. in Kontakt steht. Durch geeignete Formgebung der mit dem Steuerelement zusammenarbeitenden Führungsfläche der Kurvenscheibe läßt sich dabei erreichen, daß nach Durchführen eines Abisoliervorgangs bei noch geschlossenen Handgriffen das Zangenmaul wieder öffnet, um einen jetzt abisolierten Leiter freizugeben. Dabei kann das Steuerelement als Schaltnocken ausgebildet sein, an seinem freien Ende wenigstens eine Rolle tragen und nur über einen begrenzten Winkelbereich verschwenkbar sein. Der Schaltnocken wird dabei durch Federkraft in seine zum hinteren Zangenende weisende Verschwenk-Endstellung gedrückt.

Die wenigstens eine Kurvenscheibe selbst wird über einen mit dem verschwenkbaren Handgriff gekoppelten Gelenkhebel angetrieben, wobei sie mit einer weiteren Führungsfläche z. B. eine Rolle beaufschlagt, die an der Zugstange angebracht ist, um die Zugstange und damit die Abisolierorgane zum hinteren Zangenende hin zu bewegen.

Nach einer anderen Ausgestaltung der Erfindung ist wenigstens eine Kurvenscheibe über ein Verbindungsglied gelenkig mit einem Abschnitt des verschwenkbaren Klemmbackens gekoppelt. welcher eine Verschwenkachse für den Klemmbacken zum hinteren Zangenende hin überragt, wobei die Kurvenscheibe über einen mit dem verschwenkbaren Handgriff gekoppelten Gelenkhebel antreibbar ist, dessen freies Ende mit einer Führungsfläche der Kurvenscheibe in Kontakt steht.

Bei diesem Ausführungsbeispiel weist die Kurvenscheibe einen ihren Drehpunkt zum hinteren Zangenende hin überragenden Ansatz auf, der im Verschwenkbereich des verschwenkbaren Handgriffs aus dem gehäusefesten Handgriff herausragt. Dieser Ansatz wird, nachdem die Handgriffe weitestgehend geschlossen sind und ein Abisoliergang ausgeführt wurde, vom verschwenkbaren Handgriff beaufschlagt, so daß nunmehr bei noch geschlossenen Handgriffen die Kurvenscheibe in einer Richtung gedreht wird, die ein Öffnen des Zangenmauls und damit ein Herausnehmen des jetzt abisolierten Leiterendes aus dem Zangenmaul heraus gestattet.

Zwischen dem Drehpunkt der Kurvenscheibe und dem Verbindungsglied ist nach diesem Ausführungsbeispiel wenigstens ein Stellhebel an der Kurvenscheibe angelenkt, der sich in Richtung zum Gelenkhebel erstreckt, welcher in den Bereich zwischen Kurvenscheibe und Stellhebel einfahrbar ist, wobei der Stellhebel mit seiner dem Gelenkhebel abgewandten Kante einen an der Zugstange vorhandenen Ansatz beaufschlagt.

Auch hier läßt sich durch geeignete Formgebung der Führungsflächen bzw. Kanten des Stellhebels, die einerseits mit dem Gelenkhebel und andererseits mit dem an der Zugstange befindlichen Ansatz in Berührung stehen, ein geeigneter Verlauf der die Zugstange beaufschlagenden Kraft voreinstellen, um weniger Prelleffekte in der Zange beim Abisolieren zu erhalten.

Nach einem noch weiteren Ausführungsbeispiel der erfindungsgemäßen Zange ist wenigstens eine Kurvenscheibe an einem Abschnitt des verschwenkbaren Klemmbackens ausgebildet, welcher eine Verschwenkachse des Klemmbackens zum hinteren Zangenende hin überragt, wobei die Kurvenscheibe ferner über einen mit dem verschwenkbaren Handgriff gekoppelten Gelenkhebel antreibbar ist, dessen freies Ende mit einer Führungsfläche der Kurvenscheibe in Kontakt steht.

Bei diesem Ausführungsbeispiel ist die wenigstens eine Kurvenscheibe z. B. einstückig mit dem verschwenkbaren Klemmbacken integriert, was zu einer verbilligten Herstellung der Zange führt. Eine separate Kurvenscheibe ist nicht mehr erforderlich.

Dabei kann an der Kurvenscheibe wenigstens ein sich zum schwenkbaren Handgriff erstreckender Stellhebel angelenkt sein, derart, daß der Gelenkhebel in den Bereich zwischen Kurvenscheibe und Stellhebel einfahrbar ist, wobei der Stellhebel mit seiner dem Gelenkhebel abgewandten Kante einen an der Zugstange vorhandenen Ansatz beaufschlagt. Durch geeignete Formgebung der Führungsfläche der Kurvenscheibe sowie der einander gegenüberliegenden Kanten des Stellhebels kann wiederum ein prellarmer Betrieb der Zange beim Abisolieren sichergestellt werden.

Gemäß einer weiteren sehr vorteilhaften Ausgestaltung der Erfindung ist einer der Klemmbacken, der verschwenkbar ist, mit einem Lagerzapfen ausgestattet und über diesen Lagerzapfen in einer Lagereinrichtung herausnehmbar gelagert.

Mit anderen Worten läßt sich der verschwenkbare Klemmbacken vom Zangengehäuse in einfacher Weise abnehmen, um Zugang zum Inneren der Zange zu erhalten. Die Abnahme des verschwenkbaren Klemmbackens vom Zangengehäuse kann insbesondere dann in einfacher Weise erfolgen, wenn der bewegbare Klemmbacken über Kurvenscheiben angetrieben wird, mit deren Führungsfläche er nur über ein Kontaktelement in Berührung steht. Prinzipiell ist aber auch eine Abnahme des verschwenkbaren Klemmbackens möglich, wenn dieser gelenkig mit der Kurvenscheibe gekoppelt ist.

Vorteilhafterweise kann die Lagereinrichtung zwei Lagerplatten mit jeweils zwei federnden Schenkeln aufweisen, zwischen denen Enden des Lagerzapfens klemmend einrastbar sind. Hierdurch ist eine besonders schnelle Abnahme des verschwenkbaren Klemmbackens vom Zangengehäuse möglich und umgehkehr auch dessen schnelle Montage am Zangengehäuse.

Die Lagerplatten können dabei in Vertiefungen eingelegt werden, die sich innen an den Seitenwänden des Zangengehäuses befinden, wobei die freien Enden der Schenkel in Richtung zum Zangenmaul weisen. Hierdurch wird erreicht, daß sich die Breite derAbisolierzange infolge der Verwendung der Lagerplatten nicht vergrößert. Dabei können die Lagerplatten randseitige Ausnehmungen aufweisen, in die Ansätze der Seitenwände passend eingreifen, die in die Vertiefungen hineinragen. Hierdurch lassen sich die Lagerplatten klemmend in den Vertiefungen befestigen, so daß keine separaten Teile zu deren Halterung erforderlich sind, was den Aufbau der Abisolierzange vereinfacht.

Ausführungsbeispiele der erfindungsgemäßen Abisolierzange werden nachfolgend unter Bezugnahme auf die Zeichnung im einzelnen beschrieben. Es zeigen:
**Figur 1** eine perspektivische Ansicht einer Abisolierzange nach einem ersten Ausführungsbeispiel der Erfindung von schräg vorn;
**Figur 2** eine Seitenansicht der Abisolierzange nach Figur 1 bei geöffnetem Zangenmaul;
**Figur 3** die Seitenansicht nach Figur 2 bei eingeklemmtem, aber noch nicht abisoliertem Leiter;
**Figur 4** die Seitenansicht nach Figur 2 bei abisoliertem Leiter und leicht geöffnetem Zangenmaul, wenn die Handgriffe noch geschlossen sind;
**Figur 5** die Seitenansicht nach Figur 2 bei sich öffnenden Handgriffen;
**Figur 6** ein zweites Ausführungsbeispiel einerAbisolierzange nach der Erfindung;
**Figur 7** ein drittes Ausführungsbeispiel einer Abisolierzange nach der Erfindung;
**Figur 8** eine Abwandlung des ersten Ausführungsbeispiels der Erfindung in Seitenansicht; und
**Figur 9** eine perspektivische Ansicht der Abwandlung des ersten Ausführungsbeispiels der Erfindung von schräg vorn.

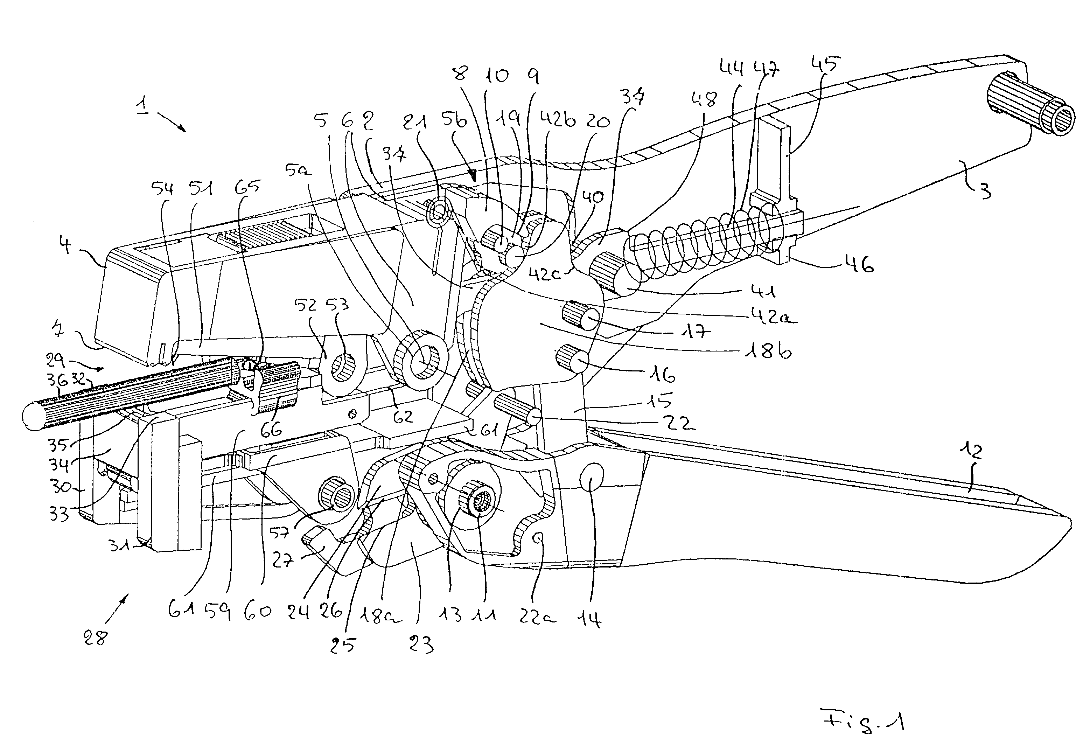

Ein erstes Ausführungsbeispiel einer Abisolierzange nach der Erfindung wird nachfolgend unter Bezugnahme auf die Figuren 1 bis 5 näher beschrieben.

Entsprechend den Figuren 1 bis 5 weist die Abisolierzange 1 ein Zangengehäuse 2 auf, mit dem ein gehäusefester Handgriff 3 z. B. einstückig verbunden ist. Gezeigt ist in diesen Figuren nur die hintere Wand des Zangengehäuses 2, wobei natürlich auch noch eine vordere Wand vorhanden ist. Entsprechendes gilt für den gehäusefesten Handgriff 3. Am Zangengehäuse 2 ist ein beweglicher Klemmbacken 4 schwenkbar gelagert, und zwar mittels eines Lagerzapfens 5, der durch Bohrungen 5a im Klemmbacken 4 hindurchragt und in Aufnahmen ruht, die sich an den gegenüberliegenden Innenseiten der Gehäusewände des Zangengehäuses 2 befinden. Die Bohrungen 5a liegen in zwei im Abstand zueinander befindlichen Seitenwänden 6 des Klemmbackens 4, wobei diese Seitenwände 6 an den Innenseiten der Gehäusewände des Zangengehäuses 2 anliegen und von diesem geführt werden. Am vorderen Ende ist der bewegliche Klemmbacken 4 krallenartig ausgebildet und besitzt dort eine Furchen aufweisende Klemmfläche 7, wobei die Furchen parallel zur Zentralachse der Bohrungen 5a verlaufen. Dagegen ist an dem der Klemmfläche 7 gegenüberliegenden Ende des beweglichen Klemmbackens 4 an einem Klemmbackenabschnitt 5b ein Ansatz 8 mit einer Ausnehmung 9 vorhanden, wobei der Ansatz 8 zur Aufnahme eines Schwenkzapfens 10 dient, der sich ebenfalls parallel zu den Bohrungen 5a erstreckt. Um diesen Schwenkzapfen 10 herum ist ein Steuerelement drehbar gelagert, das in der Ausnehmung 9 liegt, wie noch beschrieben wird.

Am unteren Zangengehäuse 2 und im Abstand unterhalb der Bohrungen 5a befindet sich ein weiterer Schwenkzapfen 11, der ebenfalls mit beiden Enden in den einander gegenüberliegenden Seitenwänden des Zangengehäuses 2 gelagert ist. Um diesen weiteren Schwenkzapfen 11 ist ein beweglicher Handgriff 12 drehbar gelagert. Dabei weist der bewegliche Handgriff 12 an seinem einen Ende eine Bohrung 13 auf, durch die der weitere Schwenkzapfen 11 hindurchragt. In geringem Abstand vom weiteren Schwenkzapfen 11, und zwar gesehen in Richtung zum hinteren freien Ende des Handgriffs 12, befindet sich im Handgriff 12 ein Schwenkzapfen 14, um den ein Gelenkhebel 15 schwenkbar gelagert ist. Dieser Gelenkhebel 15 ist in Längsrichtung des weiteren Schwenkzapfens 14 mittig zu diesem angeordnet und weist an seinem freien Ende eine Bohrung auf, durch die ein Schwenkzapfen 16 hindurchragt. Statt der Bohrung kann auch eine Pfanne für den Schwenkzapfen 16 vorgesehen sein. Dieser Schwenkzapfen 16 durchragt zwei identische Kurvenscheiben 18a, 18b, die im Abstand parallel zueinander liegen und um eine Achse 17 drehbar gelagert sind, die ihrerseits parallel zu den Bohrungen 5a verläuft und mit ihren Stirnseiten im Zangengehäuse 2 aufgenommen sein kann. Mit anderen Worten lassen sich die Kurvenscheiben 18a, 18b um die Achse 17 drehen, wenn beim Schließen der Handgriffe 3 und 12 über den Gelenkhebel 15 eine Kraft auf den Schwenkzapfen 16 ausgeübt wird. Die Achse 17 liegt dabei so, daß beim Schließen der Handgriffe 3 und 12 die Kurvenscheiben 18a, 18b im Uhrzeigersinn in Figur 1 um die Achse 17 gedreht wird.

Der Schwenkzapfen 10 trägt ein als Schaltnocken 19 ausgebildetes Steuerelement, wobei der Schaltnocken 19 an seinem freien Ende zwei Rollen 20 aufweist, die jeweils auf einem Teil der Umfangsfläche 42a, 42b der Kurvenscheiben 18a, 18b ablaufen. Bei Drehung der Kurvenscheiben 18a, 18b wird somit über die Rollen 20 und den Schaltnocken 19 der bewegliche Klemmbacken 4 angetrieben, wie noch beschrieben wird. Der Schaltnocken 19 selbst kann sich ausgehend von der in Figur 1 gezeigten Verschwenk-Endstellung nur im Uhrzeigersinn um den Schwenkzapfen 10 drehen und wird durch ein geeignetes Federelement 21 in die Verschwenk-Endstellung gedrückt. Er kann in den Bereich zwischen den beiden Kurvenscheiben 18a, 18b hineinragen.

Die Figur 1 zeigt die Zange im geöffneten Zustand, also in einer Situation, in der die Handgriffe 3 und 12 den größten Abstand voneinander aufweisen. Werden die Handgriffe 3 und 12 aufeinander zu bewegt, so bewegt sich der Handgriff 12 im Gegenuhrzeigersinn um den Schwenkzapfen 11 und drückt den Gelenkhebel 15 nach oben in Richtung zu gehäusefesten Handgriff 3. Dabei drückt, wie bereits erwähnt, der Gelenkhebel 15 den Schwenkzapfen 16 nach oben und dreht somit die Kurvenscheiben 18a, 18b um ihre Achse 17 im Uhrzeigersinn in Figur 1. Werden die Handgriffe 3 und 12 entlastet, läuft ein umgekehrter Bewegungsvorgang ab. Um den Handgriff 12 in seine Ausgangsstellung zurückzubringen, kann eine nicht dargestellte Feder um den weiteren Schwenkzapfen 11 herumgewickelt sein, die mit ihren freien Enden einerseits gegen einen gehäusefesten Zapfen 22 drückt und andererseits gegen einen Zapfen 22a, der am beweglichen Handgriff 12 vorhanden ist, und zwar im Bereich zwischen dem weiteren Schwenkzapfen 11 und dem Schwenkzapfen 14. Werden die Handgriffe 3 und 12 aufeinander zu geführt, wird die nicht dargestellte Feder gespannt. Bei entlasteten Handgriffen 3 und 12 drückt sie dagegen den Handgriff 12 über den Zapfen 22a im Uhrzeigersinn um den Schwenkzapfen 11 herum.

Wie die Figur 1 weiter erkennen läßt, ist auf dem gehäusefesten Zapfen 22 noch ein feststehendes Messerglied 23 angeordnet. Dagegen ist das andere und den Schwenkzapfen 11 überagende Ende des Handgriffs 12 als weiteres Messerglied 24 ausgebildet, wobei beide Messerglieder 23 und 24 aufeinanderzuweisende Schneiden 25 und 26 besitzen, so daß auf diese Weise ein Schneidorgan erhalten wird, das sich schließt, wenn der Handgriff 12 auf den Handgriff 3 zu bewegt wird und umgekehrt. Mit dem Bezugszeichen 27 ist ein gehäusefestes Auflager bezeichnet, das zur Positionierung von strangförmigem Gut dient, das mit dem genannten Schneidorgan zerschnitten werden soll.

Die Abisolierzange weist einen zweiten bzw. unteren Klemmbacken 28 auf, der fest mit dem Zangengehäuse 2 verbunden ist. Zwischen dem oberen bzw. beweglichen Klemmbacken 4 und dem unteren zangenfesten Klemmbacken 28 ist somit cin Zangenmaul 29 vorhanden. Der untere Klemmbacken 28 weist zwei feststehende Backenwände 30, 31 auf, die im Abstand parallel zueinander liegen und obere Anschlagflächen 32, 33 aufweisen, gegen die die Klemmfläche 7 des oberen Klemmbackens 4 schlägt, wenn das Zangenmaul 29 geschlossen wird. Zwischen den beiden Backenwänden 30 und 31 liegt ein nach unten nachgiebig gelagertes Klemmelement 34, auf dessen nach oben weisender Klemmfläche 35 ein abzuisolierender Leiter 36 zu liegen kommt, der dann beim Schließen des Zangenmauls 29 zwischen den Klemmflächen 7 und 35 eingeklemmt wird. Hierauf wird weiter unten näher eingegangen.

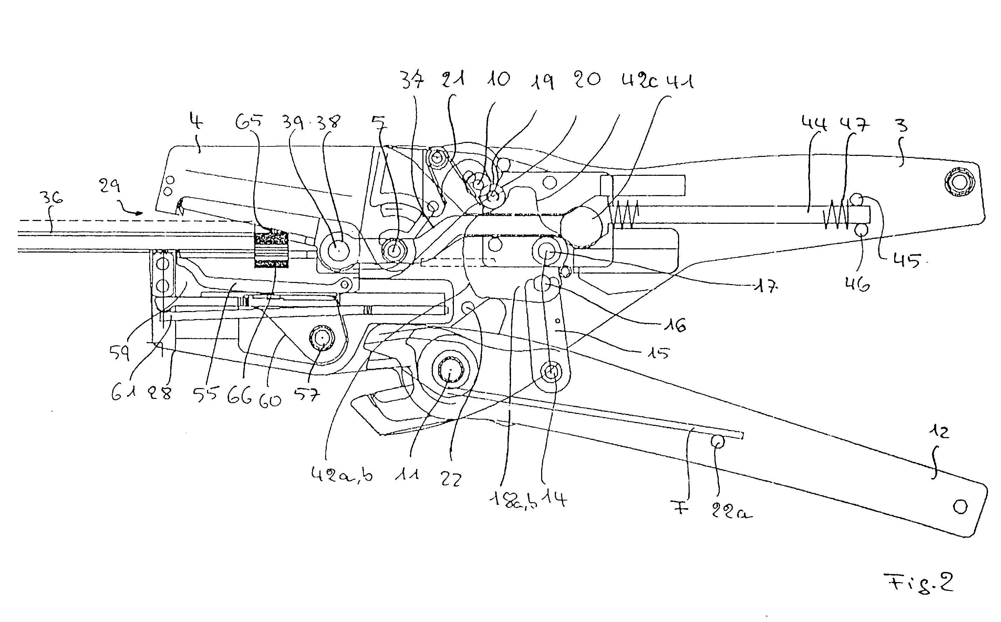

In der Abisolierzange 1 ist eine im wesentlichen horizontal liegende Zugstange 37 vorhanden, die in Zangenlängsrichtung verschiebbar gelagert ist. Diese Zugstange 37 besitzt an ihrem zum Zangenmaul 29 weisenden Ende eine horizontale Durchgangsbohrung 38 zur Aufnahme eine Schwenkzapfens 39. Durchgangsbohrung 38 und Schwenkzapfen 39 sind in Figur 2 zu erkennen. Dabei ist auch der Schwenkzapfen 39 in Zangenlängsrichtung vor- und zurückbewegbar, also nicht im Zangengehäuse 2 fest gelagert.

In Richtung zum hinteren Zangenende läuft die Zugstange 37 durch den Bereich zwischen den Kurvenscheiben 18a, 18b hindurch und weist dann zwei seitliche Ansätze 40, 41 auf, die zum Antrieb der Zugstange 37 über die Kurvenscheiben 18a, 18b dienen, wobei die Ansätze 40, 41 auf den Transportkurven 42c der Kurvenscheiben 18a, 18b gleiten. Über ihre Ansätze 40, 41 ist die Zugstange 37 auch in Längsschlitzen geführt, die sich in den seitlichen Gehäusewänden des Zangengehäuses 2 befinden und sich in horizontaler bzw. Zangenlängsrichtung erstrecken. Sie lassen eine Vor- und Zurückbewegung der Zugstange 37 zu.

Im Anschluß an ihre Ansätze 40, 41 geht die Zugstange 37 in eine Stellstange 44 über. Diese Stellstange 44 ist im wesentlichen als gerade Stange ausgebildet und liegt im oberen bzw. gehäusefesten Handgriff 3. Das dem Zangenende zugewandte Ende der Stellstange 44 ist zwischen zwei Anschlägen 45 und 46 geführt, die sich am hinteren Ende des Handgriffs 3 fest positioniert befinden. Ferner liegt auf der Stellstange 44 eine Druckfeder 47, die sich einerseits an den Anschlägen 45 und 46 abstützt und andererseits z. B. an einer Erweiterung 48 der Stellstange 44 in ihrem zum Zangenmaul 29 weisenden Bereich. Werden die Handgriffe 3 und 12 aufeinander zu bewegt und wird dabei über die Kurvenscheiben 18a, 18b und die Ansätze 40, 41 die Stellstange 44 nach hinten in Richtung zum freien Ende des Handgriffs 3 gedrückt, so wird die Druckfeder 47 komprimiert bzw. gespannt. Bei Entlastung der Handgriffe 3 und 12 drückt dann die Druckfeder 47 die Zugstangen 37 wieder in Richtung zum Zangenmaul 29. Während der gesamten Bewegung bleibt die Stellstange 44 durch die Anschläge 45 und 46 und die Ansätze 40, 41 (die z. B. auch als Rollen ausgebildet sein können) geführt.

Im Zangenmaul 29 befindet sich an der unteren Seite des beweglichen Klemmbackens 4 und hinter der Klemmfläche 7 eine Abisolierklaue 51. Diese Abisolierklaue 51 ist an ihrem hinteren Ende mit einer Lasche 52 versehen, in der sich eine Durchgangsbohrung 53 befindet. Durch diese Durchgangsbohrung 53 ragt der Schwenkzapfen 39 hindurch, der auch durch die Durchgangsbohrung 38 der Zugstange 37 hindurchläuft. Wird also die Zugstange 37 in Längsrichtung derAbisolierzange verschoben, so wird gleichzeitig damit die Abisolierklaue 51 in Zangenlängsrichtung verschoben. Dabei erfolgt eine Relativverschiebung zwischen Abisolierklaue 51 und beweglichem Klemmbacken 4. Am vorderen Ende weist die Abisolierklaue 51 eine geeignet ausgebildete Schneidkante 54 auf, die beim Schließen des Zangenmauls 29 in die Isolation eines im Zangenmaul 29 eingeklemmten Leiters 36 eindringt. Wird das Zangenmaul 29 durch Verschwenkung des Klemmbackens 4 geschlossen, so wird durch Führung des Klemmbackens 4 auch die Abisolierklaue 51 in Richtung des Leiters 36 bewegt. Erst danach erfolgt die Längsverschiebung derAbisolierklaue 51, wie noch beschrieben wird.

Die Schneidkante 54 kann beispielsweise durch Schneidspitzen einer Mehrzahl von Lamellen gebildet sein, die alle in der gleichen Weise ausgebildet und um eine Schwenkachse schwenkbar gelagert sind, die an den Seitenwänden derAbisolierklaue 51 befestigt ist. Unterhalb der freien Lamellenenden kann sich eine elastische Einrichtung befinden, beispielsweise ein elastisches Kissen, um eine Nachgiebigkeit der Lamellen zu ermöglichen.

Nachfolgend wird der Aufbau des unteren Klemmbackens 28 beschrieben.

Wie bereits erwähnt, gehören zu dem unteren Klemmbacken 28 die feststehenden Backenwände 30, 31 mit ihren oberen Anschlagflächen 32 und 33. Zwischen diesen beiden Backenwänden 30 und 31 sind weitere folgende Einrichtungen vorhanden: eine Lamellenkassette 59, ein Klemmarm 60, eine Blattfeder 61 und Führungsbahnen 62 für die Lamellenkassette 59.

Die Lamellenkassette 59 wird auf den Führungsbahnen 62 geführt, von denen in Figur 1 nur eine zu erkennen ist. Tatsächlich sind zwei Führungsbahnen 62 an den Gehäuseseitenwänden des Zangengehäuses 2 vorhanden und horizontal ausgerichtet. Auf diesen Führungsbahnen 62 kann dann die Lamellenkassette 59 aufliegen und entsprechend in Zangenlängsrichtung vor- und zurückbewegt werden. Eine seitliche Führung der Lamellenkassette 59 kann ebenfalls über die Gehäuseseitenwände des Zangengehäuses 2 erfolgen.

Der Antrieb für die Vor- und Rückbewegung der Lamellenkassette 59 erfolgt über eine Kopplung der Lamellenkassette 59 mit der Zugstange 37. Hierzu weist die Lamellenkassette 59 einen einstückig mit ihr verbundenen Flansch mit einer Durchgangsbohrung auf, durch die ebenfalls der bereits schon erwähnte Schwenkzapfen 39 hindurchgreift. Um diesen Schwenkzapfen 39 sind somit die Zugstange 37, die Lamellenkassette 59 und die Abisolierklaue 51 über die Lasche 52 schwenkbar gelagert.

Die Lamellenkassette wird bei ihrer Vor- und Zurückbewegung auf den Führungsbahnen 62 gegen diese Führungsbahnen 62 gedrückt, und zwar mit Hilfe einer Druckfeder 65, die im Zangenmaul 29 angeordnet ist. Das obere Ende der Druckfeder 65 stützt sich in einer Aufnahme an der unteren Seite der Abisolierklaue 51 ab, während sich das untere Ende der Druckfeder 65 auf einem Einstellelement 66 abstützt, das auf die obere Seite der Lamellenkassette 59 aufgesteckt ist. Dieses Einstellelement 66 ist in Längsrichtung der Lamellenkassette 59 verschiebbar, um zu bestimmen, wie weit das Ende eines Leiters in das Zangenmaul 29 eingeführt werden kann. Durch Positionierung des Einstellelements 66 in Zangenlängsrichtung läßt sich so die Länge der abzuziehenden Leiterisolation vorgeben. Dieses Einstellelement 66 dient als Anschlag für das Leiterende.

Innerhalb der Lamellenkassette 59 befindet sich ein nicht weiter dargestelltes Lamellenpaket aus einer Vielzahl von nebeneinanderliegend angeordneten und quer zur Mauerlängsrichtung bewegbaren Lamellen mit Schneidkanten, welche beim Schließen des Zangenmauls 29 von unten in eine Isolation eines durch die Klemmbacken 4 und 28 gehaltenen Leiters 36 eindringen. An der Rückseite des Lamellenpakets ist eine an das Profil des Leiters angepaßte und die Lamellenquerbewegung entsprechend bestimmende Lamellenführungseinrichtung vorgesehen. Durch diese Lamellenführungseinrichtung werden die Lamellen, die starr oder mehr oder weniger elastisch sein können, so geführt, daß sie bei Druckbeaufschlagung durch den Leiter im Randbereich des Leiters nicht mehr so stark nachgeben können wie im Zentralbereich des Leiters. Durch die Lamellenführungseinrichtung wird somit praktisch ein zu starkes Wegschwenken beim Ausweichen der Lamellen im Randbereich des Leiters verhindert, so daß diese im Randbereich des Leiters liegenden Lamellen stärker in die Leiterisolation eindringen können, was zu einem besseren Abisolierergebnis führt. Weisen die Lamellen eine gewisse Eigenelastizität auf, so können auch Leiter mit einem Profil abisoliert werden, an das die Lamellenführungseinrichtung nicht ganz exakt angepaßt ist. In Jedem Fall dringen aber auch hier die Jeweils außen liegenden Lamellen mit ihren Schneidkanten besser in die Leiterisolation ein, so daß auch in diesem Fall befriedigendere Ergebnisse möglich sind.

Der genauere Aufbau der Lamellenführungseinrichtung ist in der deutschen Patentanmeldung P 44 20 050.1 beschrieben. Die Lamellenführungseinrichtung selbst ist an der oberen Fläche des Klemmarms 60 vorhanden, während durch die Blattfeder 61 die zum Abisolieren des Leiterendes erforderliche Schneidkraft aufgebracht wird.

Der genaue Betriebsablauf der erfindungsgemäßen Abisolierzange wird nachfolgend unter Bezugnahme auf die Figuren 2 bis 5 beschrieben.

Die Figur 2 zeigt die Abisolierzange in Ruhestellung, also bei geöffnetem Zangenmaul 29 und am weitesten voneinander entfernten Handgriffen 3 und 12. Die Kurvenscheiben 18a, 18b sind jetzt am weitesten entgegengesetzt dem Uhrzeigersinn um die Achse 17 verschwenkt und die Zugstange 37 ist am weitesten in Richtung zum Zangenmaul 29 verschoben. Auch der Schaltnocken 19 nimmt seine am weitesten entgegen dem Uhrzeigersinn verschwenkte Endstellung ein.

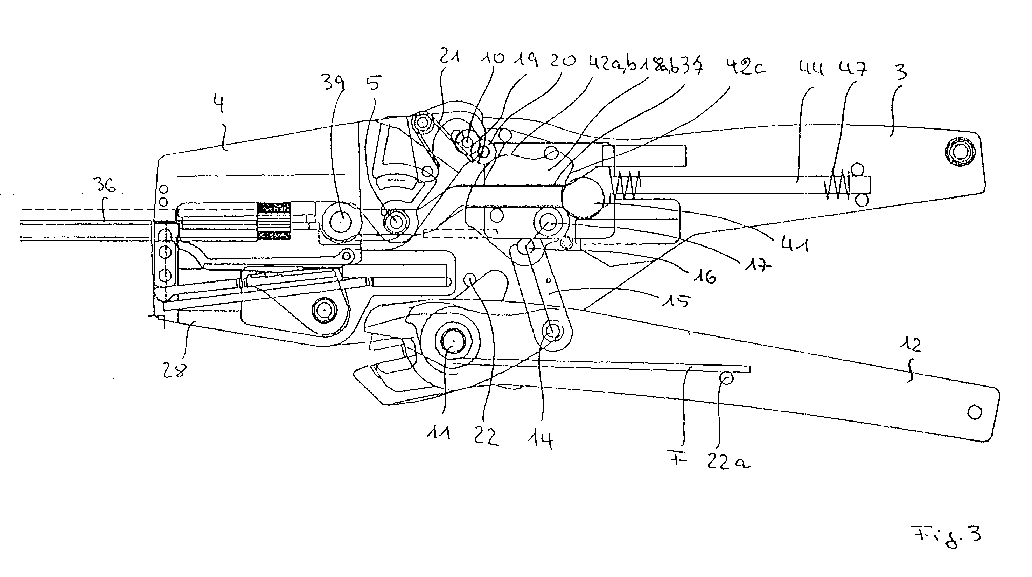

Werden jetzt gemäß Figur 3 die Handgriffe 3 und 12 aufeinander zu bewegt, so weicht der Gelenkhebel 15 im Gegenuhrzeigersinn um den Schwenkzapfen 14 aus und dreht gleichzeitig die Kurvenscheiben 18a, 18b im Uhrzeigersinn um die Achse 17. Die Transportkurven 42c der Kurvenscheiben 18a, 18b sind dabei so ausgebildet, daß in diesem Zustand die Ansätze 40, 41 noch nicht beaufschlagt werden und damit die Zugstange 37 zunächst ihre Ausgangsposition beibehält. Dagegen sind die Klemmkurven 42a, 42b der Kurvenscheiben 18a, 18b, auf der die Rollen 20 des Schaltnockens 19 abrollen, so ausgebildet, daß der bewegbare Klemmbacken 4 entgegen dem Uhrzeigersinn um den Schwenkzapfen 5 verschwenkt wird, was zur Schließung des Zangenmauls 29 führt. Der Schaltnocken 19 kann dabei nicht in einer Richtung entgegengesetzt zum Uhrzeigersinn um den ihn tragenden Schwenkzapfen 10 ausweichen. Jetzt wird die Leiterisolation durch die Lamellen zerschnitten; die Schneidkraft bleibt im wesentlichen konstant, da die Elemente 7 und 32, 33 aufeinanderliegen.

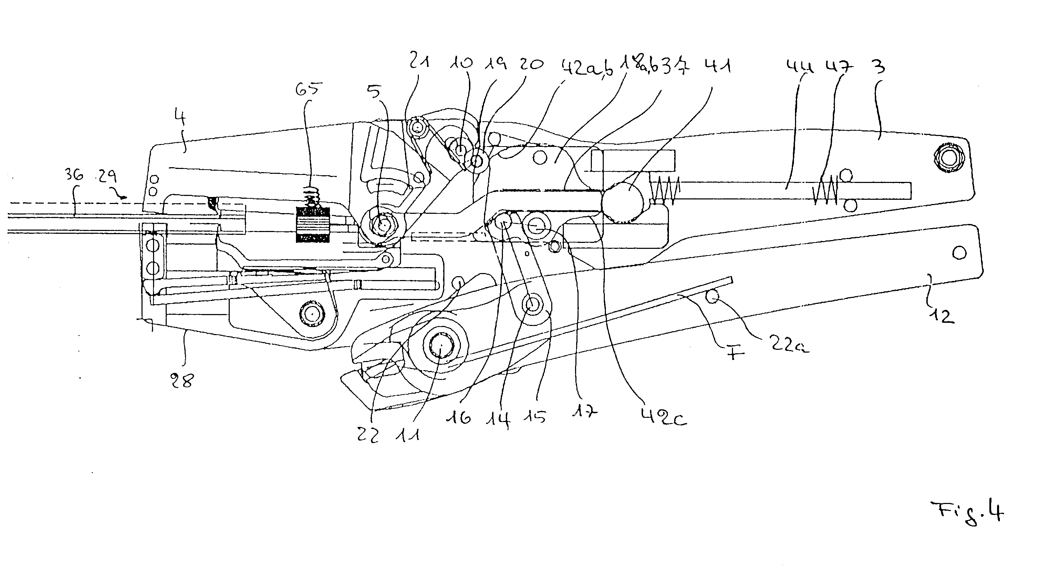

Bei noch weiterer Verschwenkung der Handgriffe 3 und 12 aufeinander zu gemäß Figur 4 laufen schließlich die Rollen 20 des Schaltnockens 19 über das Ende der Klemmkurven 42a, 42b hinaus und können sich jetzt im Uhrzeigersinn ein wenig um den Schwenkzapfen 10 drehen, so daß sich nunmehr das Zangenmaul 29 ein wenig öffnen kann, um den Leiter 36 freizugegen. Die entsprechende Drehung des bewegbaren Klemmbackens 4 im Uhrzeigersinn um den Schwenkzapfen 11 wird durch die im Zangenmaul befindliche Druckfeder 65 ermöglicht, die bestrebt ist, die Klemmbacken 4, 28 zu spreizen. Im Verlauf zu dieser Endstellung hin werden außerdem die Ansätze 40, 41 an der Zugstange 37 durch die Transportkurve 42c der Kurvenscheiben 18a, 18b so beaufschlagt, daß die Zugstange 37 in Richtung zum hinteren Zangenende hin bewegt wird. Hierdurch wird die bereits durchtrennte Leiterisolation vom Leiter 36 abgezogen. Gleichzeitig wird die Druckfeder 47 gespannt. Ebenso wird bei dem oben beschriebenen Bewegungsablauf auch das Federelement 21 vorgespannt, das versucht, den Schaltnocken 19 entgegen dem Uhrzeigersinn um den Schwenkzapfen 10 zu verdrehen.

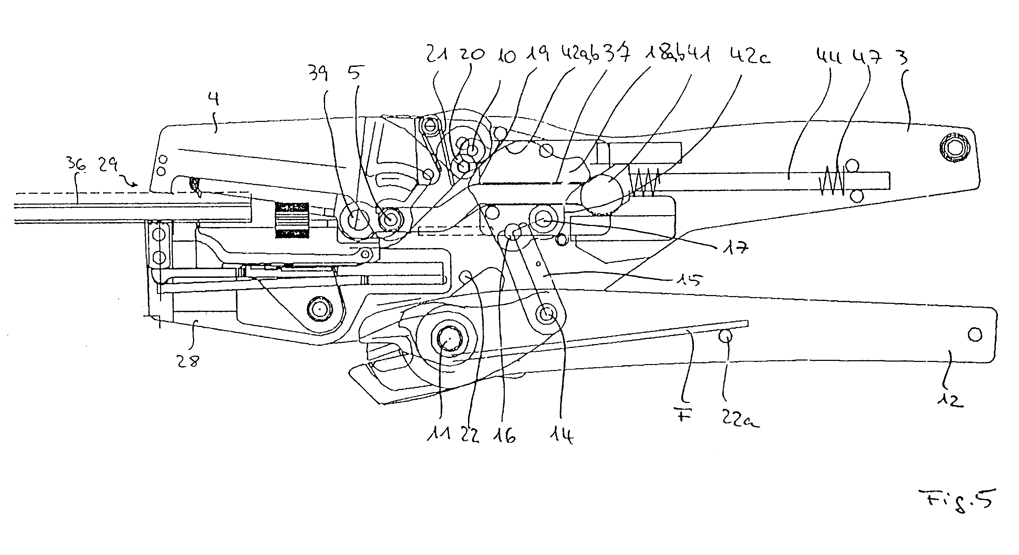

Werden jetzt gemäß Figur 5 die Handgriffe 3 und 12 entlastet, so wird der bewegbare Handgriff 12 durch die bereits eingangs genannte Feder vom gehäusefesten Handgriff 3 weggedrückt, wobei diese Feder in den Figuren 2 bis 5 mit dem Bezugszeichen F versehen ist. Sie ist um den Schwenkzapfen 11 herumgewickelt und stützt sich an den Zapfen 22 und 22a ab. Dabei wird auch der Gelenkhebel 15 nach unten gezogen und mit ihm die Kurvenscheiben 18a, 18b entgegengesetzt zum Uhrzeigersinn um die Achse 17 gedreht. Die Transportkurve 42c ermöglicht dabei ein Zurücklaufen der Zugstange 37 in Richtung zum Zangenmaul 29, während jetzt der Schaltnocken 19 durch die Klemmkurven 42a, 42b im Uhrzeigersinn um den Schwenkzapfen 10 gedreht wird, so daß das Zangenmaul 29 offen bleibt. Das Federelement 21 wird dabei weiter gespannt. Schließlich erreicht die Abisolierzange wieder ihre Ruhestellung, so daß jetzt die Klemmkurven 42a, 42b eine Rückführung des Schaltnockens 19 in seine Verschwenk-Endstellung ermöglichen, und zwar durch Wirkung des Federelements 21. Wie bereits erwähnt, kann der Schaltnocken 19 ausgehend von seiner Verschwenk-Endstellung nur im Uhrzeigersinn in den Figuren 2 bis 5 um die Schwenkachse 10 verdreht werden, während er in der anderen Richtung ständig blockiert ist. Die Zange nimmt schließlich wieder ihre in Figur 2 gezeigte Ruhestellung ein.

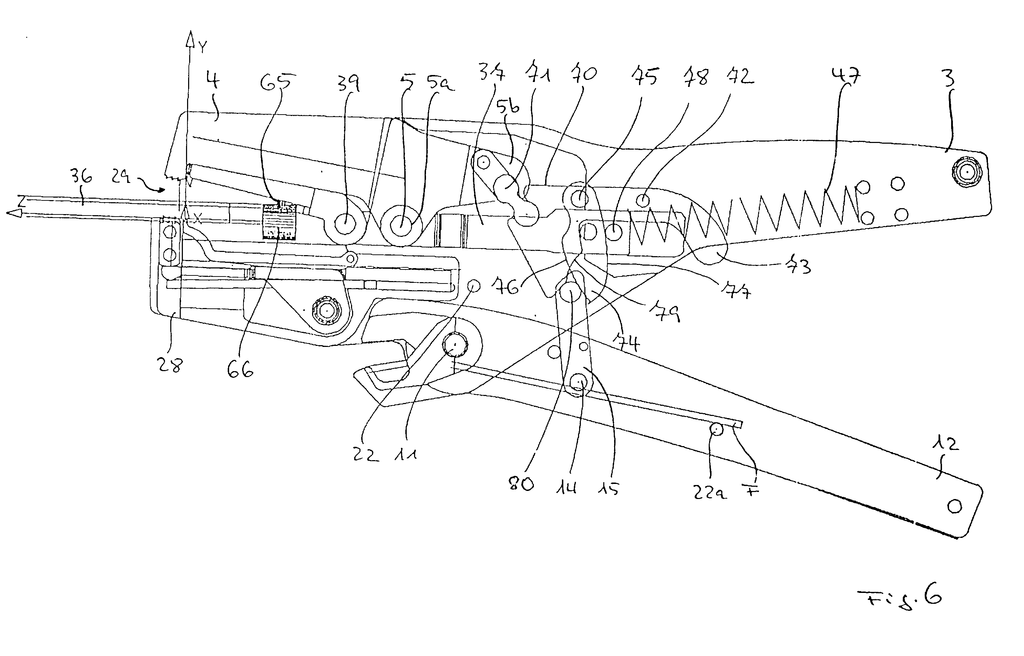

Ein zweites Ausführungsbeispiel der erfindungsgemäßen Abisolierzange ist in Figur 6 dargestellt. Gleiche Teile wie in den Figuren 1 bis 5 sind mit den gleichen Bezugszeichen versehen und werden nicht nochmals erläutert.

Im Gegensatz zu den Figuren 1 bis 5 ist hier eine Kurvenscheibe 70 vorge - sehen, die über ein Verbindungsglied 71 ständig gelenkig mit dem bewegbaren Klemmebacken 4 gekoppelt ist. Die gelenkige Kopplung über das Verbindungsglied 71 erfolgt in einem Abschnitt 5b des verschwenkbaren Klemmbackens 4, welcher die Schwenkachse 5 für den Klemmbacken 4 zum hinteren Zangenende hin überragt. Die Kurvenscheibe 70 selbst ist um eine Achse 72 drehbar gelagert, welche am gehäusefesten Handgriff 3 angebracht ist. Dabei ist die Kurvenscheibe 70 mit einem Ansatz 73 verbunden, der über die Achse 72 hinaus zum hinteren Zangenende weist und im Verschwenkbereich des verschwenkbaren Handgriffs 12 aus dem gehäusefesten Handgriff 3 herausragt.

Zwischen der Drehachse 72 der Kurvenscheibe 70 und dem Verbindungsglied 71 ist ein Stellhebel 74 an der Kurvenscheibe 70 angelenkt, und zwar mittels eines Schwenkzapfens 75. Der Stellhebel erstreckt sich in Richtung zum Gelenkhebel 15 und weist eine zum Zangenmaul 29 weisende vordere Führungskante 76 sowie eine zum hinteren Zangenende weisende Führungskante 77 auf. Die hintere Führungskante 77 steht mit einem Ansatz 78 in Berührung, welcher an der Zugstange 37 befestigt ist. Dagegen weist die vordere Führungskante 76 des Stellhebels 74 auf eine Klemmkurve 79 der Kurvenscheibe 70 zu. Der um den Zapfen 14 schwenkbare Gelenkhebel 15 weist einen Stellzapfen 80 auf, der beim Schließen der Handgriffe 3, 13 in den Bereich zwischen Klemmkurve 79 der Kurvenscheibe 70 und vorderer Führungskante 76 des Stellhebels 74 einfahrbar ist. Dabei verlaufen die Führungskanten 76, 77 und die Klemmkurve 79 so, daß beim Schließen der Handgriffe 3, 12 zunächst die Kurvenscheibe 70 um ihre Achse 72 im Uhrzeigersinn in Figur 6 gedreht wird, so daß über das Verbindungsglied 71 der bewegbare Klemmbacken entgegen dem Uhrzeigersinn um die Schwenkachse 5 verdreht wird und daher das Zangenmaul schließt. Erst danach wird durch den Stellzapfen 80 der Stellhebel 74 über seine vordere Führungskante 76 entgegen dem Uhrzeigersinn um den Schwenkzapfen 75 verschwenkt und treibt daher über den Ansatz 78 die Zugstange 37 in Richtung zum hinteren Zangenende an. Dabei kann durch den Verlauf der Führungskanten 76, 77 und der Klemmkurve 79 ein relativ prellarmes Verhalten der Abisolierzange eingestellt werden. Werden die Handgriffe 3 und 12 vollständig geschlossen, schlägt der bewegbare Handgriff 12 gegen den Ansatz 73, so daß die Kurvenscheibe 70 im Uhrzeigersinn um die Achse 72 gedreht wird, was dazu führt, daß sich der bewegbare Klemmbacken 4 ein wenig im Uhrzeigersinn um den Schwenkzapfen 5 drehen kann, wodurch sich das Zangenmaul 29 leicht öffnet, so daß eine Herausnahme des Leiters 36 möglich ist. Werden danach die entlasteten Handgriffe 3, 12 durch die Feder F gespreizt, drückt die im Zangenmaul 29 vorhandene Druckfeder 65 den bewegbaren Klemmbacken 4 weiter im Uhrzeigersinn in Figur 6 um den Schwenkzapfen 5 und damit die Kurvenscheibe 70 entgegen dem Uhrzeigersinn um die Achse 72 in ihre Ausgangsstellung zurück. Die mit dem hinteren Ende der Zugstange 37 verbundene Stellstange ist hier der Übersicht wegen nicht dargestellt. Analog zum ersten Ausführungsbeispiel können auch hier zwei parallele Kurvenscheiben zum Einsatz kommen.

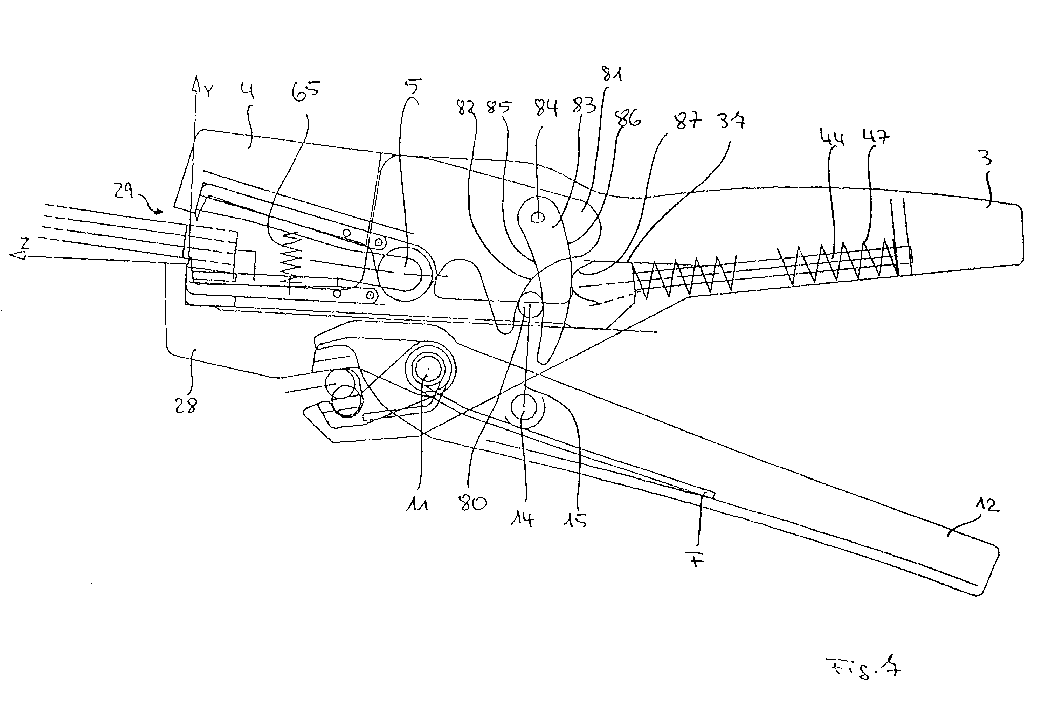

Ein drittes Ausführungsbeispiel der erfindungsgemäßen Abisolierzange ist in Figur 7 gezeigt. Auch hier sind wiederum gleiche Elemente wie in den Figuren 1 bis 6 mit den gleichen Bezugszeichen versehen und werden nicht nochmals beschrieben.

Bei diesem Ausführungsbeispiel ist eine Kurvenscheibe 81 (oder ein Kurvenscheibenpaar) an einem Abschnitt des verschwenkbaren Klemmbackens 4 ausgebildet, welcher die Verschwenkachse 5 des Klemmbackens 4 zum hinteren Zangenende hin überragt. Die Klemmkurve der Kurvenscheibe 81 ist hier mit dem Bezugszeichen 82 versehen. Diese Kurvenscheibe 81 ist über den Gelenkhebel 15 antreibbar, wobei der am freien Ende des Gelenkhebels 15 angeordnete Stellzapfen 80 auf der Klemmkurve 82 entlanggleitet. Werden die Handgriffe 3 und 12 aufeinander zu bewegt, so wird über den Stellzapfen 80 der Klemmbacken 4 in Figur 7 entgegen dem Uhrzeigersinn um den Schwenkzapfen 5 bewegt und somit das Zangenmaul 29 geschlossen.

An dem zum Zangenende weisenden hinteren Abschnitt der Kurvenscheibe 81 ist ein sich zum schwenkbaren Handgriff 12 erstreckender und sichelförmig ausgebildeter Stellhebel 83 mittels eines Zapfens 84 angelenkt. Der Stellhebel 83 weist eine vordere und zum Zangenmaul 29 weisende Führungskante 85 sowie eine hintere und zum Zangenende weisende Führungskante 86 auf. Die hintere Führungskante 86 steht mit einem Ansatz 87 in Kontakt, der an der Zugstange 37 befestigt ist.

Werden die Handgriffe 3 und 12 geschlossen, so wird der Stellzapfen 80 von unten in den Bereich zwischen Klemmkurve 82 und vorderer Führungskante 85 des Stellhebels 83 eingefahren, wobei der Verlauf der Klemmkurve 83 und der Führungskanten 85, 86 so gewählt ist, daß die Zugstange über den Ansatz 87 erst dann zum hinteren Zangenende bewegt wird, nachdem die Leiterisolation im Zangenmaul 29 durchrennt worden ist. Auch hier läßt sich durch geeigneten Verlauf von Klemmkurve 82 und Führungskanten 85, 86 ein prellarmer Betrieb der Abisolierzange einstellen. Sind zwei im Abstand parallele Kurvenscheiben 81 vorgesehen, kann sich der Stellhebel 83 zwischen ihnen befinden.

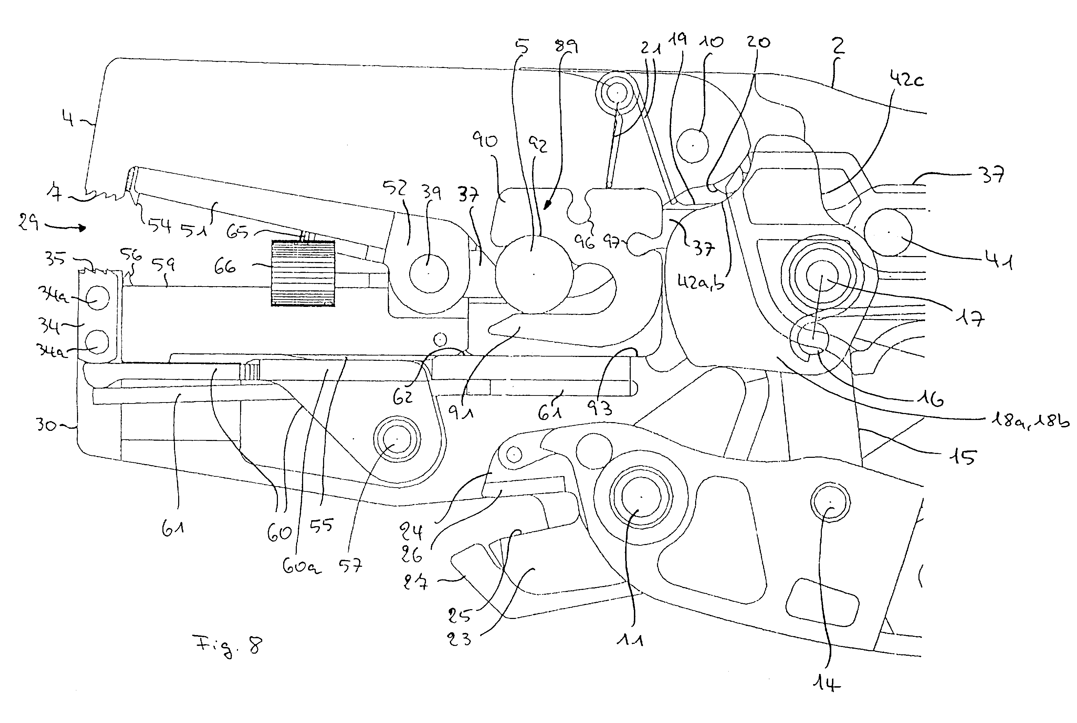

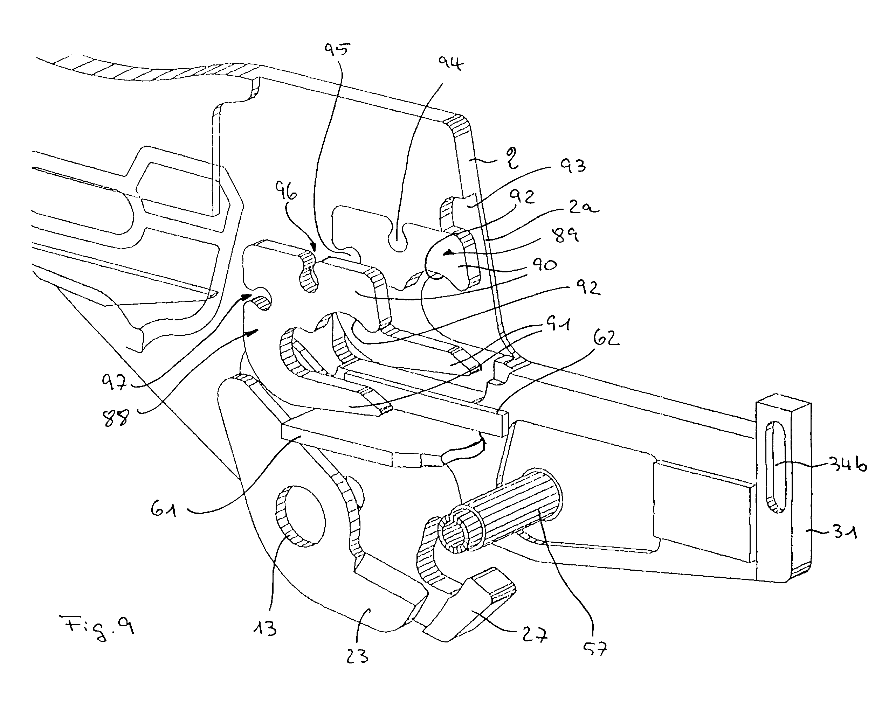

Nachfolgend wird eine Abwandlung des ersten Ausführungsbeispiels der Erfindung unter Bezugnahme auf die Figuren 8 und 9 näher beschrieben. Dabei sind gleiche Elemente wie in den Figuren 1 bis 5 mit den gleichen Bezugszeichen versehen und werden nicht nochmals beschrieben.

Entsprechend den Figuren 8 und 9 ist der verschwenkbare Klemmbacken 4 mit dem Lagerzapfen 5 fest verbunden. Dieser Lagerzapfen 5 kann auch durch zwei seitliche Ansätze am bewegbaren Klemmbacken 4 gebildet werden, die z. B. einstückig mit dem bewegbaren Klemmbacken 4 verbunden sind. Der Lagerzapfen 5 bzw. die seitlichen Ansätze überragen den bewegbaren Klemmbacken 4 seitlich nach außen. An beiden Seiten des bewegbaren Klemmbackens 4 liegt jeweils parallel zu den Seitenflächen des bewegbaren Klemmbackens 4 eine Lagerplatte 88, 89. Jede dieser Lagerplatten 88, 89 weist zwei Schenkel 90, 91 auf, die im wesentlichen horizontal liegen und deren freie Enden in Richtung zum Zangenmaul 29 weisen. Zwischen diesen Schenkeln 90, 91 ist der Lagerzapfen 5 klemmend einrastbar, wozu im wesentlichen der jeweils untere Schenkel 91 gegenüber dem oberen Schenkel 90 federnd nachgeben kann, während der jeweils obere Schenkel 90 eine konkave Ausnehmung 92 aufweist, die sich an einen Teil des Umfangs des Lagerzapfens 5 anschmiegt.

Die Lagerplatten 88, 89 sind jeweils in eine seitliche Vertiefung 93 eingelegt, die sich an der Innenseite der Seitenwand des Zangengehäuses 2 befindet. Diese Vertiefungen 93 sind so ausgebildet, daß die Lagerplatten 88, 89 ganz versenkt werden können, also mit den Innenoberflächen der Seitenwände des Zangengehäuses 2 fluchten. Dabei weisen die Vertiefungen 93 eine solche ebene Ausdehnung auf, daß der jeweils untere Schenkel 91 einerjeden Lagerplatte 88, 89 federnd nachgeben kann, wenn er beim Herausnehmen oder beim Einsetzen des Lagerzapfens 5 vom oberen Schenkel 90 weggedrückt wird. In Richtung zum Zangenmaul 29 sind die Vertiefungen 93 so weit nach vorn gezogen, daß sie die vordere Kante der Seitenwände des Zangengehäuses 2 erreichen. Eine solche vordere Kante der Seitenwand des Zangengehäuses 2 ist in Figur 9 mit dem Bezugszeichen 2a versehen. Diese Kante 2a endet vorn dort, wo der Raum zur Aufnahme des bewegbaren Klemmbackens 4 beginnt.

Um die Lagerplatten 88, 89 in den seitlichen Vertiefungen 93 zu halten, ragen in diese Vertiefungen 93 von oben und von hinten Ansätze 94, 95 hinein, die tropfenförmig ausgebildet sind. Diese Ansätze 94, 95 greifen passend in Ausnehmungen 96, 97 hinein, die sich randseitig in den Lagerplatten 98 und 99 jeweils oben und hinten befinden. Dabei schmiegen sich die Lagerplatten 88, 89 oben und hinten passend an den entsprechenden Verlauf der Vertiefungen 93 an, so daß ein sicherer Halt der Lagerplatten 88, 89 in den Vertiefungen 93 gewährleistet ist.

Soll der bewegbare Klemmbacken 4 in Figur 8 vom Zangengehäuse 2 abgenommen werden, so braucht er lediglich nach vorn gezogen zu werden, um den Lagerzapfen 5 in dieser Richtung aus den Lagerplatten 88, 89 herauszuziehen. Dabei wird automatisch auch die Rolle 20 von der Klemmkurve 42a, 42b der Kurvenscheibenanordnung 18a, 18b abgenommen. Jetzt ist das Innere der Zange zugänglich, so daß sich z. B. die Lamellenkassette 59 oder unter ihr liegende Teile auswechseln lassen, nachdem die Zugstange 37 in ihre hinterste Position geführt worden ist.

Ein Auswechseln der Lamellenkassette 59 kann z. B. deswegen erforderlich sein, weil sie mit neuen Lamellen 55 ausgestattet werden muß, deren Schneidkanten 56 infolge längeren Gebrauchs stumpf geworden sind.

Nötig kann aber auch eine Herausnahme der Lamellenkassette 59 werden, wenn die unter ihr vorhandene Lamellenführungseinrichtung infolge der Verwendung anderer Leiterquerschnitte ausgetauscht werden muß. Diese Lamellenführungseinrichtung liegt im Bereich 60a des Klemmarms 60 und ist als Platte in diesen parallel zur unteren Fläche der Lamellenkassette 59 eingelegt. Diese Platte weist, wie bereits in der deutschen Patentanmeldung P 44 20 050.1 beschrieben, randseitig eine V-förmige Ausnehmung auf, so daß über den Leiterquerschnitt die Lamellen 55 in unterschiedlicher Weise nachgeben können. Der Klemmarm 60 ist um die Drehachse 57 verschwenkbar und wird mittels der Blattfeder 61 nach oben in Richtung zum bewegbaren Klemmbacken 4 gedrückt. Dabei wird über den Klemmarm 60 auch das Klemmelement 34 in Richtung zum bewegbaren Klemmbacken 4 gedrückt, wobei das Klemmelement 34 mit seitlichen Zapfen 34a in vertikalen Ausnehmungen 34b geführt ist, die sich in den Backenwänden 30 und 31 befinden.

## Patentansprüche

1. Abisolierzange mit
- einem Zangengehäuse (2),
- zwei relativ zueinander verschwenkbaren Klemmbacken (4, 28) zur Bildung eines Zangenmauls (29), in welchem zwei Abisolierorgane (51, 59) mittels einer Zugstange (37) in Maullängsrichtung verschiebbar angeordnet sind,
- zwei relativ zueinander verschwenkbaren Handgriffen (3, 12), und
- einer im Zangengehäuse (2) angeordneten und durch die Verschwenkbewegung der Handgriffe (3, 12) antreibbaren Antriebsvorrichtung zum Verschwenken der Klemmbacken (4, 28) relativ zueinander sowie zum Längsverschieben der Zugstange (37), wobei
die Antriebsvorrichtung wenigstens eine Kurvenscheibe (18a, 18b; 70; 81) enthält, **dadurch gekennzeichnet**, daß über die führungsfläche der Kurvenscheibe, bzw. jeder Kurvenscheibe, sowohl die Relativverschwenkung der Klemmbacken (4, 28) als auch die Längsverschiebung der Zugstange (37) steuerbar ist.

2. Abisolierzange nach Anspruch 1, **dadurch gekennzeichnet**, daß mit dem Zangengehäuse (2) einer (3) der Handgriffe (3, 12) und der auf der gegenüberliegenden Seite des Zangengehäuses (2) befindliche Klemmbacken (28) starr verbunden sind.

3. Abisolierzange nach Anspruch 2, **dadurch gekennzeichnet**, daß der andere (12) der Handgriffe (3, 12) und der andere Klemmbacken (4) verschwenkbar am Zangengehäuse (2) gelagert sind.

4. Abisolierzange nach Anspruch 3, **dadurch gekennzeichnet**, daß an einem Abschnitt (5b) des verschwenkbaren Klemmbackens (4), welcher eine Verschwenkachse (5) für den Klemmbacken (4) zum hinteren Zangenende hin überragt, ein Steuerelement (19) angelenkt ist, das mit einer Führungsfläche (42a, 42b) wenigstens einer Kurvenscheibe (18a, 18b) zusammenarbeitet.

5. Abisolierzange nach Anspruch 4, **dadurch gekennzeichnet**, daß das Steuerelement (19) als Schaltnocken ausgebildet ist, an seinem freien Ende wenigstens eine Rolle (20) trägt und nur über einen begrenzten Winkelbereich verschwenkbar ist.

6. Abisolierzange nach Anspruch 5, **dadurch gekennzeichnet**, daß der Schaltnocken (19) durch die Kraft einer Feder (21) in seine zum hinteren Zangenende weisende Verschwenk-Endstellung gedrückt wird.

7. Abisolierzange nach einem der Ansprüche 4 bis 6, **dadurch gekennzeichnet**, daß die wenigstens eine Kurvenscheibe (18a, 18b) über einen mit dem verschwenkbaren Handgriff (12) gekoppelten Gelenkhebel (15) antreibbar ist.

8. Abisolierzange nach einem der Ansprüche 1 bis 7, **dadurch gekennzeichnet**, daß die wenigstens eine Kurvenscheibe (18a, 18b) mit einer weiteren Führungsfläche (42c) einen Anschlag (40, 41) beaufschlagt, der an der Zugstange (37) angebracht ist.

9. Abisolierzange nach Anspruch 3, **dadurch gekennzeichnet**, daß wenigstens eine Kurvenscheibe (70) über ein Verbindungsglied (71) gelenkig mit einem Abschnitt (5b) des verschwenkbaren Klemmbackens (4) gekoppelt ist, welcher eine Verschwenkachse (5) für den Klemmbacken (4) zum hinteren Zangenende hin überragt, und daß die Kurvenscheibe (70) über einen mit dem verschwenkbaren Handgriff (12) gekoppelten Gelenkhebel (15) antreibbar ist, dessen freies Ende mit einer Führungsfläche (79) der Kurvenscheibe (70) in Kontakt steht.

10. Abisolierzange nach Anspruch 9, **dadurch gekennzeichnet**, daß die Kurvenscheibe (70) wenigstens einen ihren Drehpunkt (72) zum hinteren Zangenende hin überragenden Ansatz (73) aufweist, der im Verschwenkbereich des verschwenkbaren Handgriffs (12) aus dem gehäusefesten Handgriff (3) herausragt.

11. Abisolierzange nach Anspruch 9 oder 10, **dadurch gekennzeichnet**, daß zwischen dem Drehpunkt (72) der Kurvenscheibe (70) und dem Verbindungsglied (71) wenigstens ein Stellhebel (74) an der Kurvenscheibe (70) angelenkt ist, der sich in Richtung zum Gelenkhebel (15) erstreckt, welcher in den Bereich zwischen Kurvenscheibe (70) und Stellhebel (74) einfahrbar ist, wobei der Stellhebel (74) mit seiner dem Gelenkhebel (15) abgewandten Kante (77) einen an der Zugstange (37) vorhandenen Ansatz (78) beaufschlagt.

12. Abisolierzange nach Anspruch 3, **dadurch gekennzeichnet**, daß wenigstens eine Kurvenscheibe (81) an einem Abschnitt des verschwenkbaren Klemmbackens (4) ausgebildet ist, welcher eine Verschwenkachse (5) des Klemmbackens (4) zum hinteren Zangenende hin überragt, und daß die Kurvenscheibe (81) über einen mit dem verschwenkbaren Handgriff (12) gekoppelten Gelenkhebel (15) antreibbar ist, dessen freies Ende mit einer Führungsfläche (82) der Kurvenscheibe (81) in Kontakt steht.

13. Abisolierzange nach Anspruch 12, **dadurch gekennzeichnet**, daß an der Kurvenscheibe (81) wenigstens ein sich zum verschwenkbaren Handgriff (12) erstreckender Stellhebel (83) angelenkt ist, derart, daß der Gelenkhebel (15) in den Bereich zwischen Kurvenscheibe (81) und Stellhebel (83) einfahrbar ist, wobei der Stellhebel (83) mit seiner dem Gelenkhebel (15) abgewandten Kante (86) einen an der Zugstange (37) vorhandenen Ansatz (87) beaufschlagt.

14. Abisolierzange nach einem derAnsprüche 1 bis 13, **dadurch gekennzeichnet**, daß einer (4) der Klemmbacken, der verschwenkbar ist, einen Lagerzapfen (5) aufweist und über diesen Lagerzapfen (5) in einer Lagereinrichtung herausnehmbar gelagert ist.

15. Abisolierzange nach Anspruch 14, **dadurch gekennzeichnet**, daß die Lagereinrichtung zwei Lagerplatten (88, 89) mit jeweils zwei Schenkeln (90, 91) aufweist, zwischen denen Enden des Lagerzapfens (5) klemmend einrastbar sind.

16. Abisolierzange nach Anspruch 15, **dadurch gekennzeichnet**, daß die Lagerplatten (88, 89) von innen in die Seitenwände des Zangengehäuses (2) eingelegt sind, derart, daß die freien Enden der Schenkel (90, 91) in Richtung zum Zangenmaul (29) weisen.

17. Abisolierzange nach Anspruch 15, **dadurch gekennzeichnet**, daß die Lagerplatten (88, 89) randseitige Ausnehmungen (96, 97) aufweisen, in die Ansätze (94, 95) der Seitenwände des Zangengehäuses (2) passend eingreifen.

## Claims

1. Stripping pliers having
- a pliers housing (2),
- two clamping jaws (4, 28), which can be pivoted relative to each other to form a mouth (29) of the pliers, in which mouth two stripping members (51, 59) are arranged such that they can be displaced in the longitudinal direction of the mouth by means of a pull-rod (37),
- two handles (3, 12), which can be pivoted relative to each other, and
- a drive device, which is arranged in the pliers housing (2) and can be driven by the pivoting movement of the handles (3, 12) for pivoting the clamping jaws (4, 28) relative to each other and for longitudinal displacement of the pull-rod (37), wherein the drive device contains at least one cam disc (18a, 18b; 70; 81),
characterized in that via the guide surface of the cam disc or each cam disc both the relative pivoting of the clamping jaws (4, 28) and the longitudinal displacement of the pull-rod (37) can be controlled.

2. Stripping pliers according to Claim 1, characterized in that one (3) of the handles (3, 12) and that clamping jaw (28) which is located on the opposite side of the pliers housing (2) are rigidly connected to the pliers housing (2).

3. Stripping pliers according to Claim 2, characterized in that the other (12) of the handles (3, 12) and the other clamping jaw (4) are pivotably mounted on the pliers housing (2).

4. Stripping pliers according to Claim 3, characterized in that, on a section (5b) of the pivotable clamping jaw (4) which projects beyond a pivot axis (5) for the clamping jaw (4) towards the rear end of the pliers, there is articulated a control element (19) which cooperates with a guide surface (42a, 42b) of at least one cam disc (18a, 18b).

5. Stripping pliers according to Claim 4, characterized in that the control element (19) is designed as a control cam, carries at least one roller (20) at its free end and can be pivoted only over a limited angular range.

6. Stripping pliers according to Claim 5, characterized in that the control cam (19) is pressed into its end pivoting position, pointing towards the rear end of the pliers, by the force of a spring (21).

7. Stripping pliers according to one of Claims 4 to 6, characterized in that the at least one cam disc (18a, 18b) can be driven via an articulated lever (15) coupled to the pivotable handle (12).

8. Stripping pliers according to one of Claims 1 to 7, characterized in that the at least one cam disc (18a, 18b) acts with a further guide surface (42c) on a stop (40, 41) which is fitted on the pull-rod (37).

9. Stripping pliers according to Claim 3, characterized in that at least one cam disc (70) is coupled in an articulated manner via a connecting element (71) to a section (5b) of the pivotable clamping jaw (4) which projects beyond a pivot axis (5) for the clamping jaw (4) towards the rear end of the pliers, and in that the cam disc (70) can be driven via an articulated lever (15) which is coupled to the pivotable handle (12) and whose free end is in contact with a guide surface (79) of the cam disc (70).

10. Stripping pliers according to Claim 9, characterized in that the cam disc (70) has at least one attachment (73) which projects beyond its pivot (72) towards the rear end of the pliers and, in the pivoting region of the pivotable handle (12), projects out of the handle (3) which is fixed to the housing.

11. Stripping pliers according to Claim 9 or 10, characterized in that, between the pivot (72) of the cam disc (70) and the connecting element (71), at least one actuating lever (74) is articulated on the cam disc (70) and extends in the direction of the articulated lever (15), which can be moved into the region between the cam disc (70) and the actuating lever (74), the actuating lever (74) acting with its edge (17) facing away from the articulated lever (15) on an attachment (78) which is present on the pull-rod (37).

12. Stripping pliers according to Claim 3, characterized in that at least one cam disc (81) is formed on a section of the pivotable clamping jaw (4) which projects beyond a pivot axis (5) of the clamping jaw (4) towards the rear end of the pliers, and in that the cam disc (81) can be driven via an articulated lever (15) which is coupled to the pivotable handle (12) and whose free end is in contact with a guide surface (82) of the cam disc (81).

13. Stripping pliers according to Claim 12, characterized in that at least one actuating lever (83), which extends towards the pivotable handle (12), is articulated on the cam disc (81) in such a way that the articulated lever (15) can be moved into the region between the cam disc (81) and the actuating lever (83), the actuating lever (83) acting with its edge (86) facing away from the articulated lever (15) on an attachment (87) which is present on the pull-rod (37).

14. Stripping pliers according to one of Claims 1 to 13, characterized in that one (4) of the clamping jaws, which is pivotable, has a bearing pin (5) and is removably mounted via this bearing pin (5) in a bearing device.

15. Stripping pliers according to Claim 14, characterized in that the bearing device has two bearing plates (88, 89) in each case having two limbs (90, 91), between which ends of the bearing pin (5) can be latched in a clamped manner.

16. Stripping pliers according to Claim 15, characterized in that the bearing plates (88, 89) are inserted from inside into the side walls of the pliers housing (2) in such a way that the free ends of the limbs (90, 91) point in the direction of the mouth (29) of the pliers.

17. Stripping pliers according to Claim 15, characterized in that the bearing plates (88, 89) have marginal cutouts (96, 97) in which the attachments (94, 95) of the side walls of the pliers housing (2) engage with a snug fit.

## Revendications

1. Pince à dénuder avec un corps de pince (2), deux mâchoires de serrage (4, 28) pouvant pivoter l'une par rapport à l'autre pour former une bouche de pince (29), dans laquelle deux organes de dénudation (51, 59) sont disposés de façon coulissante au moyen d'une tige de traction (37) dans le sens longitudinal de la bouche, deux poignées (3, 12) pouvant pivoter l'une par rapport à l'autre et un dispositif d'entraînement, disposé dans le corps de pince (2) et pouvant être entraîné par le mouvement de basculement des poignées (3, 12), pour le pivotement des mâchoires de serrage (4; 28) l'une par rapport à l'autre et pour le déplacement longitudinal de la tige de traction (37), le dispositif d'entraînement contenant au moins un disque à came (18a, 18b; 70, 81), caractérisé en ce que l'on peut contrôler au moyen des surfaces de guidage du disque à came ou, respectivement de chaque disque à came. aussi bien le pivotement relatif des mâchoires de serrage (4, 28) que le déplacement longitudinal de la tige de traction (37).

2. Pince à dénuder selon la revendication 1, caractérisée en ce que l'une (1) des poignées (3, 12) et la mâchoire de serrage (28) située sur le côté opposé du corps de tige (2) sont reliées de façon fixe au corps de pince (2).

3. Pince à dénuder selon la revendication 2. caractérisée en ce que l'autre (12) des poignées (3, 12) et l'autre mâchoire de serrage (4) sont logées de façon pivotante sur le corps de pince (2).

4. Pince à dénuder selon la revendication 3, caractérisée en ce qu'un organe de commande (19), qui travaille de concert avec une surface de guidage (42a, 42b) d'au moins un disque à came (18a, 18b), est articulé sur une partie (5b) de la mâchoire de serrage (4) pivotante. laquelle déborde d'un axe de pivotement (5) pour la mâchoire de serrage (4) en direction de l'extrémité de pince arrière.

5. Pince à dénuder selon la revendication 4, caractérisée en ce que l'élément de commande (19) est conçu comme une came de commande. porte au moins un galet (20) sur son extrémité libre et ne peut pivoter que dans une plage angulaire limitée.

6. Pince à dénuder selon la revendication 5, caractérisée en ce que la came de commande (19) est appuyée par la force d'un ressort (21) dans sa position finale de basculement dirigée vers l'extrémité de pince arrière.

7. Pince à dénuder selon l'une quelconque des revendications 4 à 6, caractérisée en ce que le au moins un disque à came (18a, 18b) peut être entraîné par un levier articulé (15) couplé avec la poignée (12) orientable.

8. Pince à dénuder selon l'une quelconque des revendications 1 à 7, caractérisée en ce que le au moins un disque à came (18a, 18b) entraîne avec une autre surface de guidage (42c) une butée (40, 41) qui est disposée sur la tige de traction (37).

9. Pince à dénuder selon la revendication 3, caractérisée en ce que au moins un disque à came (70) est couplé de façon articulée par un élément de liaison (71) avec une partie (5b) de la mâchoire de serrage (4) orientable, qui dépasse d'un axe de pivotement (5) pour la mâchoire de serrage (4) en direction de l'extrémité de pince arrière, et en ce que le disque à came (70) peut être entraîné par un levier articulé (15) couplé avec la poignée (12) orientable, levier dont l'extrémité libre est en contact avec une surface de guidage (79) du disque à came (70).

10. Pince à dénuder selon la revendication 9, caractérisée en ce que le disque à came (70) présente au moins un rebord (73) qui déborde de son point de rotation en direction de l'extrémité de pince arrière et dépasse de la poignée (3) fixée au corps dans la zone de pivotement de la poignée (12) orientable.

11. Pince à dénuder selon la revendication 9 ou 10. caractérisée en ce que. entre le point de rotation (72) du disque à came (70) et l'élément de liaison (71), on a au moins un levier de manoeuvre (74) articulé sur le disque à came (70) qui s'étend en direction du levier articulé (15), lequel peut rentrer dans la zone entre le disque à came (70) et le levier de manoeuvre (74), le levier de manoeuvre (74) entraînant avec son arête (77) opposée au levier articulé (15) un rebord (78) présent sur la tige de traction (37).

12. Pince à dénuder selon la revendication 3, caractérisée en ce qu'au moins un disque à came (81) est formé sur une partie de la mâchoire de serrage (4) orientable, qui dépasse d'un axe de pivotement (5) de la mâchoire de serrage (4) en direction de l'extrémité de pince arrière, et en ce que le disque à came (81) peut être entraîné par un levier articulé (15) couplé avec la poignée (12) pivotante, dont l'extrémité libre est en contact avec une surface de guidage (82) du disque à came (81).

13. Pince à dénuder selon la revendication 12, caractérisée en ce qu'au moins un levier de manoeuvre (83) s'étendant vers la poignée (12) orientable est articulé sur le disque à came (81), de telle manière que le levier articulé (15) peut entrer dans la zone entre le disque came (81) et le levier de manoeuvre (83), le levier de manoeuvre (83) entraînant un rebord (87) présent sur la tige de traction (37) avec son arête (86) opposée au levier articulé (15).

14. Pince à dénuder selon l'une quelconque des revendications 1 à 13, caractérisée en ce que l'une (4) des mâchoires de serrage, qui est orientable, présente un tourillon (5) et est logée dans un dispositif de support de façon pouvoir être enlevée par ce tourillon (5).

15. Pince à dénuder selon la revendication 14, caractérisée en ce que le dispositif de support présente deux plaques de support (88, 89) avec respectivement deux montants (90, 91), entre lesquels les extrémités du tourillon (5) peuvent être verrouillées par blocage.

16. Pince à dénuder selon la revendication 15, caractérisée en ce que les plaques de support (88, 89) sont insérées par l'intérieur dans les parois latérales du corps de pince (2), de telle sorte que les extrémités libres des montants (90, 91) sont dirigées en direction de la bouche de pince (29).

17. Pince à dénuder selon la revendication 15. caractérisée en ce que les plaques de support (88, 89) présentent des évidements (96, 97) côté bord, dans lesquels s'engagent de façon ajustée des rebords (94, 95) des parois latérales du corps de pince (2).
